# EUROPEAN PATENT SPECIFICATION

(11) **EP 3 440 641 B1**
(45) Date of publication and mention of the grant of the patent: **27.09.2023**
(21) Application number: 17716866.3
(22) Date of filing: 10.04.2017
(51) Int. Cl.: G07F 7/06, G07F 9/02

(54) **FRAUD DETECTION**
BETRUGSERKENNUNG
DÉTECTION DE FRAUDE

(30) Priority: 08.04.2016 EP 16164517
(43) Date of publication of application: 13.02.2019
(73) Proprietor: Tomra Systems ASA, 1372 Asker (NO)
(72) Inventor: NORDBRYHN, Andreas, 0874 Oslo (NO); HUNNES HELGESEN HANSEN, Anders, 1388 Borgen (NO)
(74) Representative: AWA Sweden AB
(86) International application number: PCT/EP2017/058528
(87) International publication number: WO 2017/174820

(56) References cited:
- US-A- 4 316 533
- US-A- 5 477 953
- US-A1- 2010 155 463

## Description

### Technical Field of the invention

The present invention relates to a system and a method for detection of fraud attempts directed to a reverse vending machine.

### Background

A reverse vending machine (RVM) is a device that accepts used items, such as food and beverage containers, and returns money to the user. The machines are popular in places that have mandatory recycling laws or container deposit legislation. Reverse vending machines have been used to recycle food and beverage containers for many years in order to prevent littering and conserve resources. The general system for recycling such used beverage containers is normally based on the customers bringing their used containers to a reverse vending machine and in return he or she gets a receipt back which can be exchanged to cash or used as payment in e.g. a grocery store.

The reverse vending machine has been developed to accept used containers made out of a wide variety of material, such as glass or different kinds of metal and plastic. The authenticity of the container is subsequently being verified by different systems mounted in or in connection to the reverse vending machine. The verification of the authenticity of the container can be based on the shape, material or other physical characteristics of the container but it can also be based on a barcode or security mark placed on the surface of the container, or a combination of such properties.

The reverse vending machine should be able to detect and handle fraud attempts and based on this, the reverse vending machine shall be able to reject non-returnable items. The systems for detecting fraud attempts has become more and more sophisticated over the years, but so has also the attempts of fraud become. Therefore there is a need for constant improvements of these systems so that they meet this challenge.

Historically, in order to reduce fraud it has been important to provide security markings which are not easy to copy; such measures normally requires expensive markings and/or advanced detector systems with high spatial resolution. Prior art (DE 102 47 252) as well as (US4316533B1) has presented an example of such a system.

### Summary of the invention

It is an object of the present invention to improve the current state of the art, to alleviate at least some of the above mentioned problems, and to provide an improved system for fraud detection in a reverse vending machine.

Aspects of the invention are defined in the appended claims.

The invention provides an easily implemented way of catching fraud requiring a less advanced detector and without requiring any special markings. In other words, the essence of the invention recedes in catching fraud attempts not by verifying a security mark or a bar code, but to verify the material the security mark or bar code is printed on.

In relation to this invention, the food or beverage container handled by the reverse vending machine may also be referred to as a collected food or beverage container or an empty food and beverage container or a used food and beverage container. In many reverse vending machines the container may be received also if it is not empty, and in some instance also if it has not even been opened.

The gist of this invention is applicable to a Reverse Vending Machine handling any type of consumer items for which there is a refund, examples of contemplated such machines are Reverse Vending Machine handling mobile telephones, batteries and/or packaging. I.e. the system and method may be used for verifying fraud related to these items according to basically the same principles as is described with reference to food and beverage containers.

Above there is stated that said at least one processing unit is configured to receive information corresponding to the detected radiation from said at least one radiation detecting device. In other words, said at least one processing unit is configured to receive information from said at least one radiation detection device, which information corresponds to, or is equal to, the radiation detected by said at least one radiation detection device.

In this document the terms "Reading" or "Decoding" should be understood as using barcode decoding, and/or character recognition and/or letter recognition and/or pattern recognition to decode a message carried by a bar code, security mark or validation mark. The message may be a graphical message having a spatial extension, examples of graphical messages having a spatial extension are EAN-codes, QR-codes, letters and symbols such as a yin and yang sign.

Examples and embodiments of said aspects of the invention are described below.

According to at least one example embodiment of the invention optical radiation is radiation with wavelength in a range from 100 nm to 1 mm according to standard DIN 5031.

In relation to this invention the surface material of the food or beverage container includes the material of which the container is made out of as well as any material present on the container surface. The surface material can consist of one or several different layers, which layers in turn may consist of the same or different materials. Material present on the container surface can either be placed on the container before it is sold to the costumer, e.g. a label or a tag provided by the producer and/or from the store selling such a container, or is foreign material. Foreign material is material added to the container, normally the container surface, after the container has been sold to the customer. Foreign material can both be non-fraudulent, such as dirt, or fraudulent. Fraudulent material is provided to the food or beverage container in order to deceive the reverse vending machine to regard a non-valid container as a valid one. There are RVM:s that determine the validity of a container based on the bar code printed thereon. If the barcode corresponds to one issued by e.g. a member of the deposit association, the container will be considered valid; otherwise not. So, in order to deceive an RVM, a valid barcode is sometimes provided on top of an invalid barcode being present on the container when sold to the costumer e.g. abroad. In this example the valid barcode is foreign material, whereas the invalid barcode is not. The valid barcode could of course also be provided on a container, which did not have any barcode when sold to the costumer.

According to one example, the fraudulent container is made from scratch by e.g. a 3D-pinter, this fraudulent container may optionally include a valid bar code or security mark. In these instances the whole container represent a foreign material, which at the same time is fraudulent.

According to another example, a different object than container is used as a base, i.e. a different object than the Reverse vending machine is designed to accept. In this instance the whole object represent a foreign material, which at the same time is fraudulent.

A surface free of foreign material is referred to as the normal surface of the container.

In general, there are three ways that radiation can interact with a material or material surface, it can be reflected at, absorbed by and/or transmitted through the material or material surface. In more detail, the reflection can be diffuse and/or specular. Moreover, the illuminating radiation can be reflected at the surface and/or in the surface after the beam has penetrated the outmost surface of the food or beverage container. Furthermore, a first portion of the radiation may be reflected at a foreign material placed on the surface of the container, while a second portion of the radiation is reflected at normal surface of the container, which normal surface is arranged to the side of or beneath the foreign material.

Additionally or alternatively, the illuminating radiation can be partially or fully transmitted through the container and, optionally, simultaneously be reflected on a material placed on the container. Such material can be a foreign material, both fraudulent and non-fraudulent.

Additionally or alternatively, the illuminating radiation can be absorbed in the normal surface of the container and/or the foreign material, and, optionally, spontaneously radiation may be emitted from the normal surface of the container and/or foreign material. This emitted light can e.g. be due to fluorescence or similar effects.

According to at least one example of the invention the system for fraud detection in a reverse vending machine can be arranged in a self-contained unit to be mounted in the reverse vending machine, i.e. the unit comprises the radiation emitting device and the radiation detector device as well as the processing unit. The radiation emitting device, the radiation detector device and the processing unit may also be mounted in the reverse vending machine separately. Moreover, the processing unit may be placed in the reverse vending machine but it could also be placed outside the vending machine, either in the same room or at another location. The processing unit may be connected to the reverse vending machine either by wire or wireless, or by a combination wire and wireless connection.

According to at least one example of the invention there may be several radiation emitting devices and/or several radiation detector devices. The plurality of the radiation emitting devices may be mounted in the reverse vending machine as one unit but they may also be mounted separately. The radiation emitting devices might be mounted in such way that the food or beverage container receives radiation from different angles. Further, the plurality of radiation detector devices can be mounted in the reverse vending machine may be mounted as unit but they may also be mounted separately. The radiation detector devices may be mounted in such a way that the radiation being scattered in different direction after reflection at or in the surface of the food or beverage container can be detected.

According to at least one example of the invention the reverse vending machine may comprise a receptacle for receiving and supporting the container when it is illuminated.

Radiation that has interacted with the container as described above, is subsequently received by a radiation detection device. If the radiation detection device is sensitive to at least a portion of the received radiation wavelengths, this radiation that the radiation detection device is sensitive to will be detected and registered by the radiation detection device. The registration of radiation includes converting the detected radiation to an analog and/or digital format. In relation to this invention the terms radiation registered by the radiation detection device, and radiation recorded by the radiation detection device are used interchangeably; and could also be referred to as the radiation sensed by the radiation detection device, or registered radiation or recorded radiation. In other words, registration of radiation may also be referred to as recording of radiation.

In relation to this invention receiving additional radiation means receiving radiation of a predetermined wavelength range, which has a substantially higher intensity compared to the radiation received from a container where no foreign material is present. Substantially higher intensity means at least 10, or at least 100, or at least 1 000 or at least 10 000 times higher compared to what is received from a valid container. Advantageously, the intensity of the additional radiation is clearly above the noise level of the radiation detector device.

According to at least one example of the invention the additional radiation may be registered with a value corresponding or equal to the resulting intensity (e.g. the total recorded radiation, e.g. during a predetermined time interval and/or for one or more wavelength ranges) from one detector or from several detectors. In case one or more pixilated sensors is/are used, the resulting intensity can be as the sum of all or a sub-set of these pixels. Further, the resulting intensity may be calculated via summing or integration of one or more recorded wavelengths spectra over one or more predetermined wavelength ranges.

According to at least one example embodiment of the invention the transfer of information corresponding to the detected radiation to said processing unit, is performed only when detecting radiation comprising wavelengths outside the wavelength range received from valid food and beverage containers, and the determination of the existence of additional radiation, or the determination of the existence of additional radiation emitted from said background, is equal to receiving information from said radiation detecting device.

A "processing unit", as used in this disclosure, means any machine, device, circuit, component, or module, or any system of machines, devices, circuits, components, modules, or the like, which are capable of manipulating data according to one or more instructions, such as, for example, without limitation, a processor, a microprocessor, a PLC, a central processing unit, a general purpose computer, a super computer, a personal computer, a laptop computer, a palmtop computer, a notebook computer, a desktop computer, a workstation computer, a server, or the like, or an array of processors, microprocessors, central processing units, general purpose computers, super computers, personal computers, laptop computers, palmtop computers, notebook computers, desktop computers, workstation computers, servers, or the like. Further, the computer may include an electronic device configured to communicate over a communication link. The electronic device may include, for example, but is not limited to, a mobile telephone, a personal data assistant (PDA), a mobile computer, a stationary computer, a smart phone, mobile station, user equipment, or the like. Manipulation of some data can be accomplished so simply that relay logic can be used.

Moreover, the processing unit may include two or more processors. The processors may be at the same location or at different locations, either in the reverse vending machine or outside the reverse vending machine. Additionally, the processors can be connected to each other either by wire or wirelessly.

According to one example the processing unit comprises a processing circuitry. A first part of the processing circuitry is arranged in close vicinity of the radiation detection device, and performs a pre-processing of said recorded radiation e.g. filtering of the recorded radiation; a second part of the processing circuitry, arranged at a different location either inside or outside of the Reverse vending machine, receives the output from pre-processing of the recorded radiation and performs subsequent processing thereof, e.g. determines the existence of additional radiation or determines the existence of additional radiation emitted from said background. According to one example, the first and second part of the processing circuitry may be arranged different circuit boards arranged at remote locations. The first and second parts of the processing circuitry are connected to each or by wire and/or wirelessly.

According to at least one embodiment of the invention, said at least one processing unit comprises a processing circuitry, and a first portion of said processing circuitry is arranged inside the housing of the reverse vending machine and a second portion of said processing circuitry is arranged outside the housing of the reverse vending machine; wherein said first and second portions of said processing circuitry are configured to in cooperation perform said steps of:
- receive information corresponding to the detected radiation from said at least one radiation detecting device;
- analyzing said information corresponding to the detected radiation to determine the existence of additional radiation or to determine the existence of additional radiation emitted from said background, which additional radiation is not received from valid food or beverage containers, and
- upon determination of the existence of said additional radiation classify said food or beverage container as fraudulent..

In relation to this invention, the term housing of the reverse vending machine refers to the outermost cover of the Reverse Vending Machine, inside which i.a. the means for transporting and/or holding the food and beverage container is arranged.

In relation to this invention, when actions relating to e.g. the processing of and/or storing and/or retrieving data is described, e.g. as in the two paragraphs just following this one, such actions may be performed by the processing unit and the processing circuitry therein.

According to one example, the detected and recorded radiation is compared to one or more predetermined radiation values, which radiation values each has been classified as valid or invalid. Based on this comparison, the detected and recorded radiation is determined as valid or invalid. One comparison may be performed for the whole wavelength range, or the wavelength range may be divided into subsets, and one comparison is made for each subset; each subset being associated with a respective set of predetermined radiation values.

According to one example of the invention a wavelength spectrum is detected and recorded by the radiation detection device, preferably the format of the information provided by the detector is such that different radiation intensities are linked to different predetermined wavelength ranges. Information corresponding to or representing this recorded wavelength spectrum, is transmitted to said processing unit. Thereafter, information corresponding to or representing the registered wavelength spectrum is compared to at least one classified wavelength spectrum, i.e. a known wavelength spectrum that has been classified as valid or invalid, and based on this comparison any existence of additional radiation is identified.

According to at least one example of the invention the same or substantially the same irradiation and/or the same wavelength range is used each time radiation is detected and recorded, which recorded radiation is subsequently analyzed for the presence of additional radiation. That the same irradiation and/or the same wavelength rage is used includes that the same filter (if present) is used before the light source and/or the detector each time radiation is emitted and/or detected. Even if there is a variation in the irradiation or wavelength range due to age or stability of the optical components, such as the radiation emitting device, the radiation detector and any optical filters if present etc., this is still considered to constitute use of the same or substantially the same irradiation and/or wavelength range. However, if a sequence of different illuminations (e.g. IR and visual light) is used to detect different features in e.g. security marking during different illuminations) - this is not a use of the same or substantially the same irradiation and/or wavelength range.

Additionally or alternatively, according to at least one embodiment, when determining the presence of additional radiation the processing unit does not use pattern recognition in a 2D resolved image, additionally or alternatively nor/not feature detection, additionally or alternatively nor/not feature extraction, additionally or alternatively nor/not algorithms for detecting and isolating desired portions or shapes (features) of the container in one or more digitized image(s),e.g. in order to determine that the container is positioned and/or moves as expected. Example of recognitions/detections that are not used include edge, corner, blob and ridge detection..

Optionally, the radiation emitting device and/or the radiation detection device may comprise optical filters e.g. to make the additional radiation more easily detectable by decreasing the noise level and/or level of background illumination in the recorded radiation..

According to at least one embodiment of the invention at least one radiation emitting device emits radiation within one or more wavelength ranges selected from a group consisting of the ultraviolet range, the visible range and the infrared range. Optionally said radiation emitting device emits radiation only within said one or more wavelength ranges.

According to at least one example embodiment of the invention the radiation within the ultraviolet range is wavelengths within the range of 100 nm to 400 nm, which according to DIN 5031 may be divided into UV-C 100-280 nm, UV-B 280-400 nm and UV-A 315-400 nm. Moreover, the radiation within the visible range comprises wavelengths within the range of 400 nm to 800 nm, which may be divided into violet, bluegreen, green, yellowgreen, yellow, orange and red light. Further the radiation within the infrared range is wavelengths within the range of 800 nm to 1mm, which may be divided into IR-A 800-1400 nm, IR-B 1400 nm - 3,0 µm and IR-C 3.0 µm - 1 mm. The radiation source emits radiation within at least one of the above stated rages or sub-ranges, and may emit radiation within two or more stated sub-ranges, i.e. within combinations of the above stated ranges and sub-ranges. That radiation is emitted within one wavelength range does not exclude that radiation is also emitted outside this wavelength range. In other words, that radiation is emitted within one wavelength means that it comprises wavelength in this one wavelength range.

According to at least one example of the invention the radiation emitting device can for example be one or more light emitting diodes. Further, it can be an incandescent lamp, a fluorescent lamp, or a gas discharge lamp such as a deuterium lamp or xenon lamp.

According to at least one example embodiment of the present invention the additional radiation originates from a fraudulent material present on said food and beverage container.

According to at least one example embodiment of the present invention the additional radiation can be fluorescence originating from the fraudulent material in the response to the food or beverage container being irradiated with radiation in the ultraviolet range. Hence, the fluorescence may be of wavelengths between 100 nm to 400 nm The fluorescence can e.g. originate from brightening agents in the paper used for the fraudulent material. It is known that bottles are fluorescent, due to e.g. a fluorescent print or a fluorescent drink that is visible through the bottle surface; a false classification of these items may be avoided, by only irradiating non-fluorescent portions of such bottles.

According to another example, an illumination with NIR radiation is used. Most black pigments used in barcodes for food and beverage packaging absorb strongly at a wide range of optical wavelengths, including visible and NIR. Similarly, the black toner used in laser printing is absorptive across a wide spectrum. However, the black ink used in inkjet printers, while absorptive in the visible range (400-700nm) is typically transparent to NIR wavelengths. Thus, a lamp emitting at e.g. 900nm will be reflected both at the white and black zones of the barcode, and this additional radiation may be detected and converted to a fraud assessment.

Thus,
1) If additional radiation is not detected, the object is assumed to be valid, although it may be fraudulent (if made with a laser printer)
2) If additional radiation is detected, the object is assumed to be fraudulent, with high confidence.

Moreover, the additional radiation can be reflected radiation where a fraudulent material gives rise to a higher intensity of reflected radiation compared to the amount of radiation being reflected by the food or beverage container without the fraudulent material.

According to at least one example embodiment of the invention the fraudulent material is one or more elements selected from a group consisting of paper, plastic foils, metal foils, textiles, or bulk plastic.

According to at least one example of the invention the radiation emitting device, the radiation detection device and/or the combination thereof may be chosen by the man skilled in the art to match the optical irradiation response of the fraudulent material. I.e. by comparing the optical irradiation response from the fraudulent material to the optical irradiation response of a valid container the man skilled in the art may select the appropriate combination of radiation emitting device and radiation detection device as well as the algorithms for analyzing the recorded radiation.

According to at least one example embodiment of the invention a barcode or security marking is present on said fraudulent material, and the fraudulent material covers or replaces an original barcode or original security marking provided on said food or beverage container.

According to at least one example of the invention the fraudulent material is placed on the food or beverage container in order to achieve the reward, e.g. a receipt which can be exchanged to cash or award points,, which award would not have been received if the food or beverage container had been returned without the fraudulent material.

According to at least one embodiment of the present invention the additional radiation comprises one or more of ultraviolet radiation, fluorescent radiation, visible radiation and infrared radiation, and/or comprises radiation within one or more wavelength ranges selected from a group consisting of the ultraviolet range, the visible range and the infrared range and/or fluorescent radiation

According to at least one example embodiment of the invention the additional radiation can be radiation being reflected at and/or in the surface of the container, radiation transmitted through the surface(s) of the container as well as radiation emitted from the fraudulent material.

According to at least one example embodiment of the invention the food or beverage container is provided with a barcode or security mark, and the radiation detection device is configured to receive light reflected at, or in the vicinity of, said barcode or security mark; and/or configured to receive light emitted at, or in the vicinity of, said barcode or security mark.

According to at least one example embodiment of the invention the radiation emitting device and/or radiation detection device may optionally be configured to illuminate or detect radiation from the barcode and/or security mark and/or the vicinity of the barcode and/or the security mark. The vicinity of the barcode and/or the security mark is the area around or surrounding the same. The vicinity is a distance in the range of 0 mm to 10 mm as measured outside the barcode or the security mark, and preferable a distance between 0-3 mm to the side of the code which may be suitable for a UPC or EAN code. Hence, the illuminated area and/or the area from which radiation is detected may e.g. be in the range of 1700 mm² to 5500 mm².

In this document the background around and/or surrounding and/or behind a validation mark, is the area of the container in the vicinity of, but not including, the validation mark or the negative space associated with the mark. For a EAN bar code having black and white lines printed a white surface, the background is both the white lines in the bar code as well as the white area surrounding the bar code.

According to at least one example of the invention there are different security markings and/or barcodes which can be present on the food or beverage container. Such as security markings may for example be ink with specific spectral properties, fluorescent pigment, phosphorescent pigment, embossed patterns, or holographic films.

According to at least one example embodiment of the invention the radiation detection device is configured to detect radiation within one or more wavelength ranges selected from a group consisting of the ultraviolet range, the visible range and the infrared range.

According to at least one example of the invention the radiation detection device may comprise one or more photodiodes, and/or one or more image sensors, such as CCD or CMOS arrays and/or one or more camera sensors. The one or more photodiodes or image sensors may be mounted in the reverse vending machine separated and/or remote from each other. Further, the photodiode may be made of GaP, GaAs, Si, Ge, InGaAs or HgCdTe.

According to at least one example of the invention the information corresponding to the detected radiation which is received at said processing unit, is received in an analog or digital format.

According to at least one example of the invention the readings from the radiation detector device may be of different digital format. Moreover, the readings from the radiation detection device can be of different size, i.e. the amount of information collected can be different. For example, the information can only include a signal indicative of the presence of fraudulent material, or a spectrum of optical radiation can be collected, i.e. the information contains different intensities related to different wavelengths. The spectra collected can be within one or more of the sub-wavelength ranges discussed above in relation to optical radiation.

According to at least one example of the invention the information can be transferred from the radiation detection device to the processing unit by wire or wirelessly or by a combination of wire and wirelessly, i.e. one part of the distance it is communicated by wire and another part of the distance it is communicated wirelessly.

According to at least one example of the invention the processing unit may process the information received from the radiation detection device may be in the format of an image. Such an image may be analyzed by the use of algorithms by image processing software.

According to at least one example embodiment of the invention said step of analyzing said information corresponding to the detected radiation to determine the existence of additional radiation emitted from said background, which additional radiation is not received from valid food or beverage containers; further comprises the step of identifying a validation area on said container, which validation area contains said validation mark and a background surrounding said validation mark.

According to at least one example embodiment of the invention, said fraudulent material preferably forms the background to said validation mark.

According to at least one example embodiment of the invention said step of determining additional radiation, or determining additional radiation emitted from said background, comprises detecting a fraudulent material present on said food or beverage container, and which fraudulent material forms the background to said validation mark and which fraudulent material is optionally selected from a group consisting of paper, plastic foils, metal foils, textiles, bulk plastic or combinations of the same.

According to at least one example embodiment of the invention, valid containers may have a slightly fluorescent background and/or a slightly fluorescent validity marking print (e.g. a slightly fluorescent material is used for the negatie and/or postitive space associated with the validity marking). In order for these to be considered as valid, the analyzing said step of analyzing said information corresponding to the detected radiation to determine the existence of additional radiation emitted from said background comprises the step of determining that the received radiation exceeds a predetermined intensity threshold which may be the same or different for different wavelengths, and the same or different for different container types. The container type may e.g. be determined by use of the validation mark or by other conventional means. Additionally or alternatively, the processing unit may "mask off" or disregard areas of the container that is considered to be part of the validity marking print or positive space associated with the validity mark. Additionally or alternatively, only the areas of the container that is considered to be part of the background or negative space associated with the validity mark is taken into consideration when performing the analyzing said step of analyzing said information corresponding to the detected radiation to determine the existence of additional radiation emitted from said background.

Additionally or alternatively, said step of analyzing said information corresponding to the detected radiation to determine the existence of additional radiation emitted from said background comprises the step of determining that the received radiation exceeds a predetermined intensity threshold which may be the same or different for different wavelengths, and the same or different for different container types. This is advantageous as it allows for classifying containers which carries a validation mark printed with an ink which emits some additional radiation and/or which carries a validation mark printed on a background which some emits additional radiation as valid, by setting the intensity threshold to a predetermined value or values. I.e. if the additional radiation is lower than the intensity threshold the container is classified as valid or potentially valid; but if the additional radiation is higher than the threshold the container is classified as invalid (invalid background higly fluorescing)

According to at least one example embodiment of the invention, upon determination of the non-existence of said additional radiation said food or beverage container is classified as valid or potentially valid. The food or beverage container may e.g. be classified as potentially valid if further tests are to be performed before the food or beverage container is finally classified as valid, these tests are different from to those according to this invention.

The further tests may be conventional test used in known RVM machines involving a reading, decoding and/or validation of a validation mark; see also page 1 lines 18-25 as stated in 2^{nd} and 4^{th} paragraph of the background section of this document. The test may involve that the surface area of the bottle is searched or scanned until the area that contains or seems to contain the validity mark is identified, thereafter the validation mark is read and/or decoded and/or validated e.g. by just determining that it identified mark has the format of the expected validation mark, i.e. that what seems like a barcode really is a barcode; and/or by comparing the information or message in the validation mark to a stored information (within or outside the RVM) about the validation mark, e.g. that the number represented by an EAN-code is a valid barcode, or checking the spatial correspondence between a graphical validation mark (such as a yin and yang sign) and a digital representation of the validation mark stored inside or outside the RVM machine to determine that the validation mark is valid.

According to at least one example embodiment of the invention, the steps of:
- identifying a validation area on said container, which validation area contains said validation mark and a background surrounding said validation mark;
- performing a reading or decoding operation on the validation mark contained in said validation area by use of barcode decoding and/or letter recognition and/or character recognition and/or pattern recognition, and optionally,
- upon a successful reading or decoding of the validation mark classify said food or beverage container as potentially valid are performed at said at least one processing unit, and may be performed before or after the said step of determining the existence of additional radiation emitted from said background, Thus, said at least one processing unit is configured to performing the steps recited above.

According to at least one example of the invention the same sensor reading or the same image of the container validation mark or the same information corresponding to the detected radiation from said radiation detecting device is used both when determining of the existence of additional radiation emitted from said background as well as when performing a reading or decoding operation on the validation mark contained in said validation area by use of barcode decoding and/or letter recognition and/or character recognition and/or pattern recognition.

According to at least one example of the invention different sensor readings or different images of the container validation mark or different information corresponding to the detected radiation from said radiation detecting device is used both when determining of the existence of additional radiation emitted from said background compared to when performing a reading or decoding operation on the validation mark contained in said validation area by use of barcode decoding and/or letter recognition and/or character recognition and/or pattern recognition.

According to at least one example of the invention the information, after being analyzed by the processing unit and when a fraud attempt is discovered, it may be communicated to the customer or a person monitoring the RVM, e.g. in the store where the RVM is located. Moreover, the food or beverage container is rejected if a fraud attempt has been discovered. Alternatively or additionally, the customer could be photographed and the fraudulent container retained as evidence of attempted fraud.

According to at least one example embodiment of the invention the at least one processing unit comprises at least a first and a second processing unit;
wherein said processing units are configured to in cooperation perform the said steps of:
- receive information corresponding to the detected radiation from said at least one radiation detecting device;
- analyzing said information corresponding to the detected radiation to determine the existence of additional radiation or to determine the existence of additional radiation emitted from said background, which additional radiation is not received from valid food or beverage containers, and
- upon determination of the existence of said additional radiation classify said food or beverage container as fraudulent, and optionally
- upon determination of the non-existence of said additional radiation classify said food or beverage container as valid or potentially valid.

According to at least one example embodiment of the invention the reading from the detector is compared to a stored valid and/or invalid wavelength spectrum using for example an ASIC or FPGA circuit in communication with a processor. Based on this comparison identifying any existence of additional radiation and hence the existence of fraudulent material.

According to at least one example embodiment of the invention the analyzing of said information corresponding to the detected radiation to determine the existence of additional radiation or to determine the existence of additional radiation emitted from said background, does not include comparing information representing a spatially resolved image of the container surface to a predetermined image or information representing a predetermined image of a valid security marking. Additionally or alternatively, the analyzing of said information corresponding to the detected radiation to determine the existence of additional radiation or to determine the existence of additional radiation emitted from said background, does not include the use of pattern recognition e.g. to determine that a known security mark is present. Additionally or alternatively, the additional radiation is received from the fraudulent material whereon a security marking is provided, and not from the security marking itself. In this case, what is detected and/or recognized is the fraudulent material, and not the security marking. DE 102 47 252 describes the use of pattern recognition to determine that two different security marks are present; one in visual light and one in infrared light. The description explains that the method performed in e.g. DE 102 47 252, where an image of the container surface is compared to known valid security images, is not performed according to this invention. According to at least one example of the invention there is no comparison of images, just a search for radiation originated from a fraudulent material.

### Brief description of the drawings

Fig. 1 shows a schematic view of the system according to at least one example embodiment of the present invention.
Fig. 2 shows camera images of recorded fluorescence from a food or beverage container according to at least on example embodiment of the invention.
Fig. 3 shows spectrum from fraudulent materials
Fig. 4 shows a flow chart of a method for fraud detection according to at least one embodiment of the present invention.
Fig. 5 shows in perspective view, an example of a reverse vending machine.

### Detailed description of the invention

In the present detailed description, embodiments of a system for fraud detection in a reverse vending machine are discussed. It should be noted that this by no means limits the scope of the invention, which is also applicable in other circumstances for instance with other types or variants of systems for fraud detection shown in the appended drawings. Further, that specific components are mentioned in connection to an embodiment of the invention does not mean that those components cannot be used to an advantage together with other embodiments of the invention.

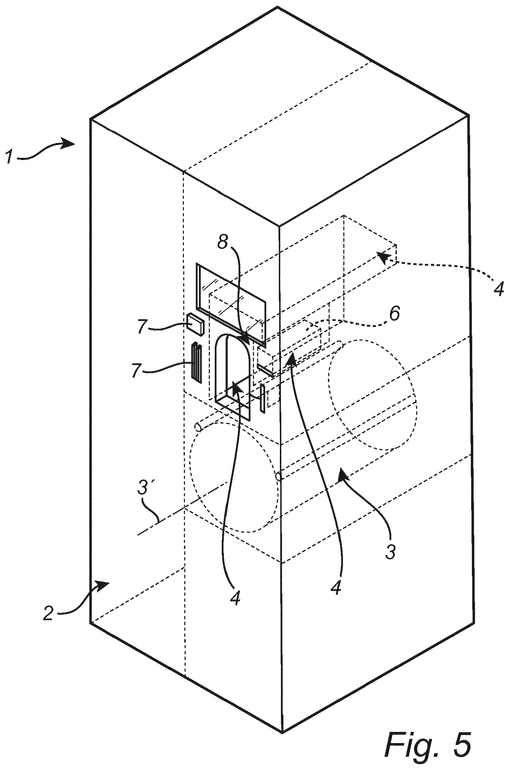

Fig. 5 shows an exemplary reverse vending machine having; object supporting, rotating, sorting and conveyor unit 3; detector device 4; receipt printer activated with a button 7, and safety apparatus 8. When returning an item it is inserted into the unit through an opening in the housing of the reverse vending machine.

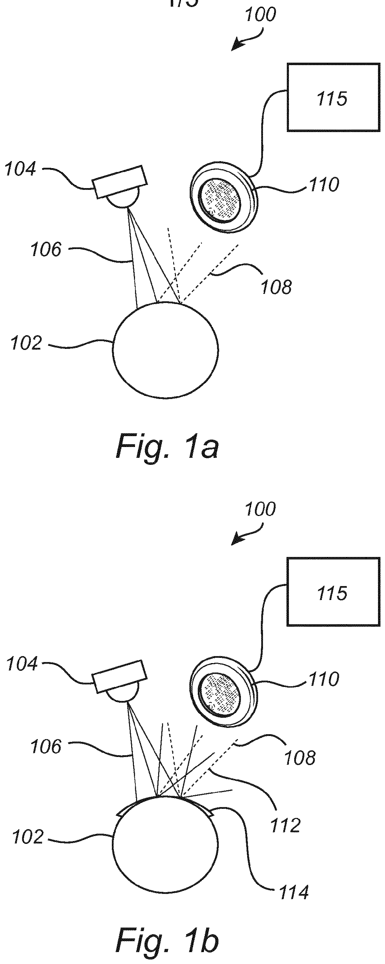

Fig. 1a shows an exemplary system 100 for fraud detection in a reverse vending machine. The system 100 for validation of a food or beverage container 102 comprises a radiation emitting device 104 and a radiation detection device 110. Further, the system 100 comprises a processing unit (not shown in the figure).

The food or beverage container 102 is may be out of a variety of material, such as glass, or different kinds of metal or different kinds of plastic. The food or beverage container 102 may be placed on a receptacle mounted in the reverse vending machine, which is configured to support the receptacle when it is illuminated.

The radiation emitting device 104 may be a source for ultraviolet radiation, visible radiation and/or infra red radiation. The radiation emitting 104 device may for example be an UV-LED source. Further, the system100 can include a plurality of radiation emitting devices 104.

The radiation detection device 110 may a single photodiode, several diodes and/or a pixilated sensor. According to one example, the radiation detector may views a portion of the container, which portion may optionally fully encircle the container in at least one plane. In Fig 1a the circle 102 is shown that fully encircles the container in one plane. Alternatively, the portion only partly encircles the container in at least one plane. Element 114 in Fig. 1b partly encircles the container in two planes.

The processing unit may be located at the same or different locations. The processing unit receives information from the radiation detection device and analyzes that information in order to determine if the food or beverage container 102 brought to the reverse vending machine is valid or fraudulent.

The system 100 may be mounted in a reverse vending machine either as a unit or separately. Further, the system 100 may include other optical devices/tools, such as optical filters, in order to further improve the fraud detection.

Fig. 1b is showing the same system 100 as fig. 1a. In addition to the parts discussed in connection to Fig 1a, Fig. 1b further shows a fraudulent material 114 being placed on the food or beverage container 102.
By illuminating the fraudulent material by the radiation emitting device 104 an additional radiation is being received at the radiation detection device 110. The processing unit connected to the system 100 analysis information detected at the radiation detection device and determine if the food or beverage container 102 is valid or fraudulent.

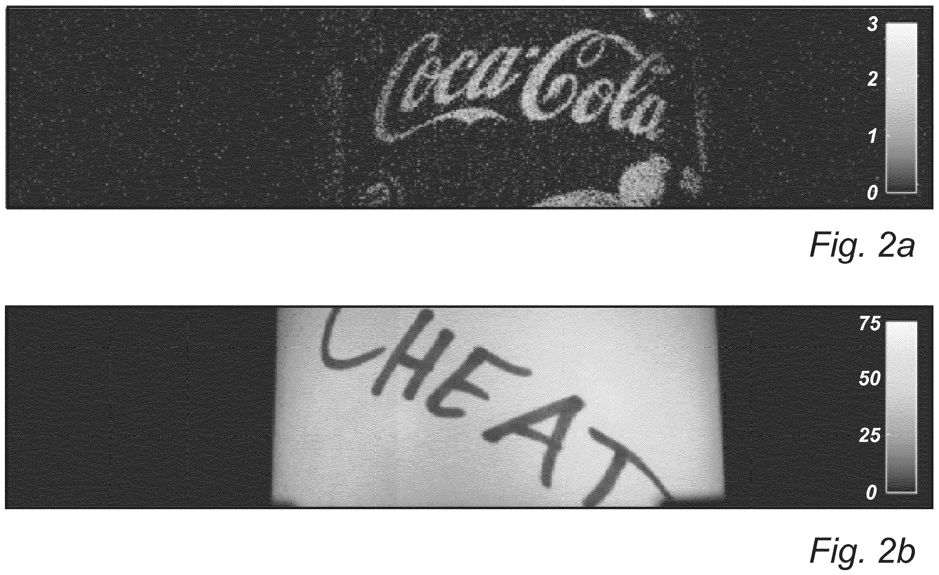

Fig. 2a shows a camera image which shows the fluorescent signal from a valid food or beverage container.

Fig. 2b shows a camera image which shows the fluorescent signal from a fraudulent food or beverage container, the fraudulent food or beverage container being provided with bleached paper and irradiated with UV-radiation, in this example 385 nm. The text CHEAT was written on the bleached paper with an Edding 2000 permanent marker. If compared to Fig. 2a the detected radiation from the fraudulent container is more than 10 times higher than the detected radiation from the valid container. Such additional radiation due to the fraudulent material is the base for rejection or classifying the container as invalid.

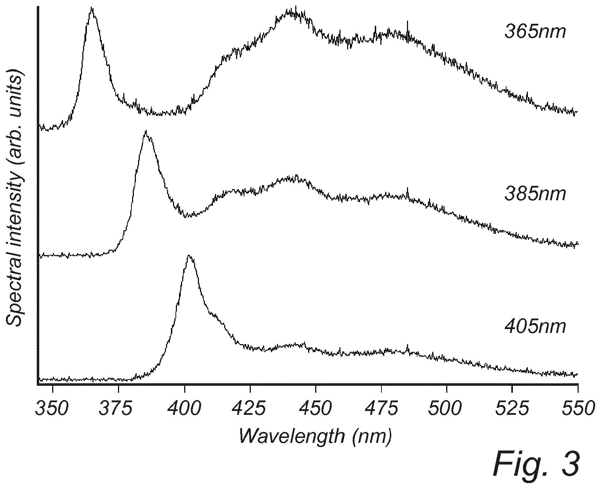

The combined spectrum of scattered and fluorescent light for each wavelength is shown in Fig. 3. This data was collected by illuminating a sheet of commercial-grade printer paper at close range, and collecting the scattered light with an optical fiber leading to a spectrometer. The spectra are normalized so that source peaks have equal height. Fraction of signal in the fluorescence band is 87 % for 365nm, 80% for 385nm, 56 % for 405nm.

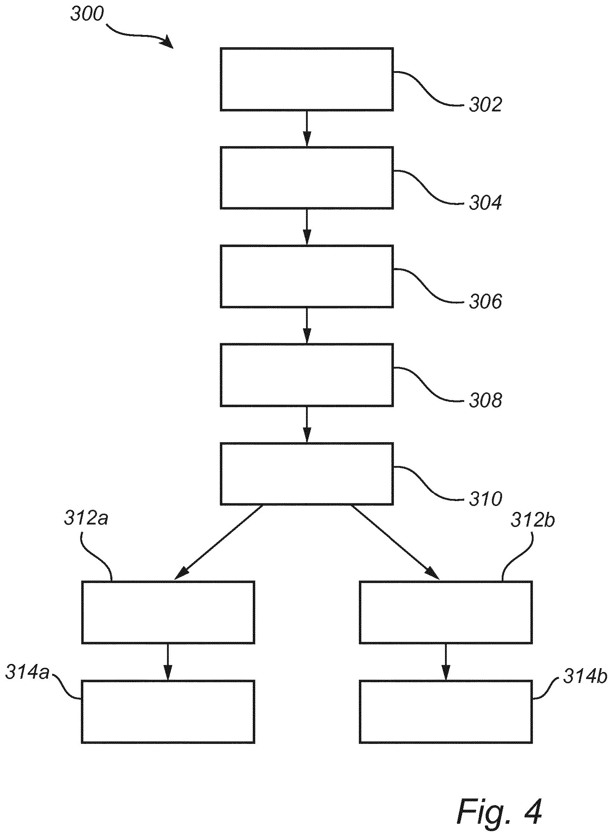

Fig. 4 shows an exemplary method 300 for fraud detection in a reverse vending machine. An appropriate system for performing the method is described in connection with Fig. 1 above. Of course, other systems may be used to perform this exemplary method.

The first step 302 of the method 300 comprises receiving a food or beverage container. The used container may be received by a receptacle mounted in the reverse vending machine, which is configured to support at least during the steps in of the method presented here. The next step 304 comprises illuminating the surface of the food or beverage container. The radiation emitting device illuminates the surface of the container directly on or close to the barcode and/or the security marking placed on the surface of the container. The next step 306 comprises detecting radiation which has been reflected and/or emitted from the surface of the container. The reflected radiation can be reflected at and/or in the surface. The emitted radiation can e.g. be fluorescence. The next step 308 comprises the transferring information from the radiation detection device to the processing unit. The next step 310 comprises analyzing of the information in the processing unit. The analyzing of the information being transferred from the radiation detection device does not include pattern recognition. The analyzed results in the next step 312. This step 312 includes determining if there is an existence of fraudulent material 312a or determining if there is a non-existence of fraudulent material 312b. The flowing step 314 comprises classifying if the food or beverage container as fraudulent 314a or valid 314b.

It is of course understood that variations to the shown embodiment may be effected and still be within the scope of the invention. The skilled person realizes that a number of modifications of the embodiments described herein are possible without departing from the scope of the invention, which is defined in the appended claims.

## Claims

1. A method (300) for detecting fraud in a Reverse Vending Machine System (1), the Reverse Vending Machine System having at least one radiation emitting device (104), a radiation detecting device (110) and at least one processing unit (115), the method comprising the steps of:
- receiving (302) a food or beverage container (102), which carries a validation mark and a background around said validation mark, wherein said validation mark is a security mark and/or barcode, and said background is arranged in the vicinity of said validation mark, which validation mark is configured to be read by use of barcode decoding, and/or by use of character recognition and/or letter recognition and/or pattern recognition to decode a graphical message having a spatial extension;
- illuminating (304) the surface of said food or beverage container, which contains said validation mark, with radiation (106) comprising wavelengths within the wavelength range of optical radiation, which radiation is emitted from said at least one radiation emitting device;
- detecting radiation (306, 108) being emitted from said at least one radiation emitting device and subsequently reflected at said food or beverage container, and/or radiation being emitted from said at least one radiation emitting device and subsequently transmitted through said food or beverage container, and/or detecting radiation emitted from said food or beverage container in response to said illumination with said radiation detecting device;
- transmitting information (308) corresponding to the detected radiation from said radiation detecting device to said at least one processing unit;
- at said at least one processing unit:
- analyzing said information (310) corresponding to the detected radiation to identify a validation area on said container, the validation area containing said validation mark and said background arranged in the vicinity of said validation mark, and determine the existence of additional radiation emitted from said background in the vicinity of said validation mark, which additional radiation is not received from valid food or beverage containers, and which additional radiation comprises fluorescent radiation, and
- upon determination (312a) of the existence of said additional radiation classify said food or beverage container as fraudulent (314a).

2. The method according to claim 1, wherein said background in the vicinity of said validation mark is the background within 10 mm of said validation mark.

3. The method according to claim 1 or 2, wherein said validation area is in the range of 1700 mm² to 5500 mm².

4. A method according to any of the preceding claims, wherein
- said step of transmitting information corresponding to the detected radiation to said processing unit is performed only when detecting radiation comprising wavelengths outside the wavelength range received from valid food and beverage containers.

5. A method according to any of the preceding claims, further comprising the step of:
- providing information representing at least one classified wavelength spectrum to said processing unit, each of said at least one classified wavelength spectrum being classified as valid or invalid; and wherein
- said step of detecting radiation comprises registering a wavelength spectrum;
- said step of transmitting information corresponding to the detected radiation to said processing unit comprises transmitting information representing said registered wavelength spectrum to said processing unit; and
- said step of determine the existence of additional radiation emitted from said background comprises comparing said information corresponding to the registered wavelength spectrum to said at least one classified wavelength spectrum, and based on this comparison identifying any existence of additional radiation.

6. A method according to any of the preceding claims, wherein said step of analyzing said information corresponding to the detected radiation to determine the existence of additional radiation from said background, does not include comparing information representing a spatially resolved image of the container surface to information representing a predetermined image of a valid security marking or validation mark.

7. A method according to any of the preceding claims, wherein at said processing unit a further test is performed comprising the steps of:
- performing a reading operation on the validation mark contained in said validation area by use of barcode decoding, and/or by use of character recognition and/or letter recognition and/or pattern recognition,
- upon a successful reading of the validation mark classify said food or beverage container as potentially valid.

8. A method according to any one of said preceding claims, wherein said step of determining additional radiation emitted from said background comprises detecting a fraudulent material (114) present on said food or beverage container, and which fraudulent material forms the background to
said validation mark and optionally is selected from a group consisting of paper, plastic foils, metal foils, textiles, bulk plastic or combinations of the same.

9. A method according to any one of the preceding claims, wherein said step of analyzing said information (310) corresponding to the detected radiation to determine the existence of additional radiation emitted from said background comprises the step of determining that the received radiation exceeds a predetermined threshold value.

10. A system (100) for fraud detection in a Reverse Vending Machine (1), said system comprises:
- at least one radiation emitting device (104) configured to emit radiation (106) within the wavelength range of optical radiation for illuminating an area of said a food or beverage container (102) being received by said reverse vending machine, which area contains a validation mark and a background around said validation mark, wherein said validation mark is a security mark and/or a barcode, and said background is arranged in the vicinity of said validation mark;
- at least one radiation detection device (110) configured to detect radiation (108) emitted from said at least one radiation emitting device and subsequently reflected at said food or beverage container, and/or emitted from said at least one radiation emitting device and subsequently transmitted through said food or beverage container and/or detecting radiation emitted from said food or beverage container in response to said illumination by said radiation detecting device;
- at least one processing unit (115) in communication with said at least one radiation detecting device, wherein the at least one processing unit is configured to:
- receive information corresponding to the detected radiation from said at least one radiation detecting device;
- identify a validation area on said container, which validation area contains said validation mark and said background arranged in the vicinity of said validation mark;
- analyzing said information corresponding to the detected radiation to determine the existence of additional radiation emitted from said background in the vicinity of said validation mark, which additional radiation is not received from valid food or beverage containers, and which additional radiation comprises fluorescent radiation, and
- upon determination of the existence of said additional radiation classify said food or beverage container as fraudulent
- read the validation mark contained in said validation area by use of barcode decoding, and/or by use of character recognition and/or letter recognition and/or pattern recognition to decode a graphical message having a spatial extension, and optionally
- upon a successful reading of the validation mark classify said food or beverage container as potentially valid.

11. A system according to claim 10, wherein said at least one radiation emitting device emits radiation within one or more wavelength ranges selected from a group consisting of the ultraviolet range, the visible range and the infrared range, and
wherein optionally said radiation emitting device emits radiation only within said one or more wavelength ranges.

12. A system according to any one of claims 10-11, wherein said additional radiation originates from a fraudulent material (114) present on said food or beverage container, wherein said fraudulent material forms the background to said validation mark, and wherein said fraudulent material optionally is one or more elements selected from a group consisting of paper, plastic foils, metal foils, textiles, bulk plastic or combinations of the same.

13. A system according to claim 12, wherein said validation mark is
present on said fraudulent material, and which fraudulent material covers or replaces an original barcode or original security marking provided on said food or beverage container, or otherwise alters the appearance of said food or beverage container.

14. A system according to any one of claims 10-13, wherein said additional radiation comprises radiation within one or more wavelength ranges selected from a group consisting of the ultraviolet range, the visible range and the infrared range and/or fluorescent radiation.

15. A system according to any of claims 10-14, wherein
- said radiation detection device is configured to receive light reflected at, or in the vicinity of, said barcode or security mark; and/or configured to receive light emitted at, or in the vicinity of, said barcode or security mark.

16. A system according to any of claims 10-15, wherein said radiation detection device is configured to detect radiation within one or more wavelength ranges selected from a group consisting of the ultraviolet range, the visible range and the infrared range.

17. A system according to any of claims 10-16, wherein said at least one processing unit is further configured to: upon determination of the non-existence of said additional radiation classify said food or beverage container as valid or potentially valid.

18. A system according to any of claims 10-17, wherein said at least one processing unit comprises at least a first and a second processing unit;
and
wherein said first and second processing units are configured to in cooperation perform said steps of:
- receive information corresponding to the detected radiation from said at least one radiation detecting device;
- analyzing said information corresponding to the detected radiation to determine the existence of additional radiation emitted from said background in the vicinity of said validation mark, which additional radiation is not received from valid food or beverage containers, and which additional radiation comprises fluorescent radiation, and
- upon determination of the existence of said additional radiation classify said food or beverage container as fraudulent.

19. A Reverse vending machine provided with a system for fraud detection according to any one of claims 10-18.

20. A Reverse vending machine according to claim 19, when provided with the system for fraud detection of claim 18, wherein said at least one processing unit comprises a processing circuitry, and a first portion of said processing circuitry is arranged inside the housing of the reverse vending machine and a second portion of said processing circuitry is arranged outside the housing of the reverse vending machine; and
wherein said first and second portions of said processing circuitry correspond to the first and second processing units.

## Patentansprüche

1. Verfahren (300) zum Erkennen von Betrug in einem Leergutautomatensystem (1), wobei das Leergutautomatensystem mindestens eine Strahlung emittierende Vorrichtung (104), eine Strahlung erkennende Vorrichtung (110) und mindestens eine Verarbeitungseinheit (115) aufweist, wobei das Verfahren die folgenden Schritte umfasst:
Aufnehmen (302) eines Nahrungsmittel- oder Getränkebehälters (102), der ein Prüfzeichen und einen Hintergrund rings um das Prüfzeichen tragen,
wobei das Prüfzeichen eine Sicherheitszeichen und/oder ein Barcode ist und der Hintergrund in der Nähe des Prüfzeichens angeordnet ist, wobei das Prüfzeichen dafür konfiguriert ist, mit Hilfe von Barcode-Decodierung und/oder mit Hilfe von Zeichenerkennung und/oder vonBuchstabenerkennung und/oder von Mustererkennung ausgelesen zu werden, um eine grafische Nachricht zu decodieren, die eine räumliche Ausdehnung aufweist,
- Beleuchten (304) der Oberfläche des Nahrungsmittel- oder Getränkebehälters, die das Prüfzeichen enthält, mit Strahlung (106), die Wellenlängen in dem Wellenlängenbereich optischer Strahlung umfasst, wobei die Strahlung von der mindestens einen Strahlung emittierenden Vorrichtung emittiert wird,
- Erkennen von Strahlung (306, 108), die von der mindestens einen Strahlung emittierenden Vorrichtung emittiert und danach an dem Nahrungsmittel- oder Getränkebehälter reflektiert wird, und/oder von Strahlung, die von der mindestens einen Strahlung emittierenden Vorrichtung emittiert und dann durch den Nahrungsmittel- oder Getränkebehälter durchgeleitet wird, und/oder Erkennen von Strahlung, die von dem Nahrungsmittel- oder Getränkebehälter in Reaktion auf das Beleuchten emittiert wird, mit der Strahlung erkennenden Vorrichtung,
- Übertragen von Informationen (308), die der erkannten Strahlung entsprechen, von der Strahlung erkennenden Vorrichtung an die mindestens eine Verarbeitungseinheit,
- in der mindestens einen Verarbeitungseinheit:
- Analysieren der Informationen (310), die der erkannten Strahlung entsprechen, um einen Prüfbereich auf dem Behälter zu identifizieren, wobei der Prüfbereich das Prüfzeichen und den in der Nähe des Prüfzeichens angeordneten Hintergrund enthält, und Bestimmen des Vorhandenseins zusätzlicher Strahlung, die von dem Hintergrund in der Nähe des Prüfzeichens emittiert wird, wobei die zusätzliche Strahlung nicht von gültigen Nahrungsmittel- oder Getränkebehältern empfangen wird und wobei die zusätzliche Strahlung fluoreszierende Strahlung umfasst, und
- Klassifizieren des Nahrungsmittel- oder Getränkebehälters als Betrugsversuch (314a) auf das Bestimmen (312a) des Vorhandenseins der zusätzlichen Strahlung hin.

2. Verfahren nach Anspruch 1, wobei der Hintergrund in der Nähe des Prüfzeichens der Hintergrund innerhalb von 10 mm von dem Prüfzeichen ist.

3. Verfahren nach Anspruch 1 oder 2, wobei der Prüfbereich im Bereich von 1700 mm² bis 5500 mm² liegt.

4. Verfahren nach einem der vorhergehenden Ansprüche, wobei
- der Schritt des Übertragens von Informationen, die der erkannten Strahlung entsprechen, an die Verarbeitungseinheit nur dann ausgeführt wird, wenn Strahlung erkannt wird, die Wellenlängen außerhalb des Wellenlängenbereichs umfasst, der von gültigen Nahrungsmittel- oder Getränkebehältern empfangen wird.

5. Verfahren nach einem der vorhergehenden Ansprüche, ferner folgenden Schritt umfassend:
- Bereitstellen von Informationen, die mindestens ein klassifiziertes Wellenlängenspektrum darstellen, für die Verarbeitungseinheit, wobei jedes des mindestens einen klassifizierten Wellenlängenspektrums als gültig oder ungültig klassifiziert wird, und wobei:
- der Schritt des Erkennens von Strahlung das Registrieren eines Wellenlängenspektrums umfasst,
- der Schritt des Übertragens von Informationen, die der erkannten Strahlung entsprechen, an die Verarbeitungseinheit das Übertragen von Informationen, welche das registrierte Wellenlängenspektrum darstellen, an die Verarbeitungseinheit umfasst und
- der Schritt des Bestimmens des Vorhandenseins zusätzlicher Strahlung, die von dem Hintergrund emittiert wird, das Vergleichen der Informationen, die das registrierte Wellenlängenspektrum darstellen, mit dem mindestens einen klassifizierten Wellenlängenspektrum und das Identifizieren etwaigen Vorhandenseins zusätzlicher Strahlung basierend auf diesem Vergleich umfasst.

6. Verfahren nach einem der vorhergehenden Ansprüche, wobei der Schritt des Analysierens der Informationen, die der erkannten Strahlung entsprechen, um das Vorhandensein zusätzlicher Strahlung von dem Hintergrund zu bestimmen, nicht das Vergleichen von Informationen, die ein räumlich aufgelöstes Bild der Behälteroberfläche darstellen, mit Informationen, die ein festgelegtes Bild eines gültigen Sicherheitszeichens oder Prüfzeichens darstellen, umfasst.

7. Verfahren nach einem der vorhergehenden Ansprüche, wobei in der Verarbeitungseinheit eine weitere Prüfung durchgeführt wird, welche die folgenden Schritte umfasst:
- Durchführen einer Leseoperation an dem Prüfzeichen, das in dem Gültigkeitsbereich enthalten ist, mit Hilfe von Barcode-Decodierung und/oder mit Hilfe von Zeichenerkennung und/oder Buchstabenerkennung und/oder Mustererkennung,
- Klassifizieren des Nahrungsmittel- oder Getränkebehälters als potentiell gültig auf ein erfolgreiches Lesen des Prüfzeichens hin.

8. Verfahren nach einem der vorhergehenden Ansprüche, wobei der Schritt des Bestimmens zusätzlicher Strahlung, die von dem Hintergrund emittiert wird, das Erkennen eines Betrugsversuchsmaterials (114) umfasst, das an dem Nahrungsmittel- oder Getränkebehälter vorhanden ist, und wobei das Betrugsversuchsmaterial (114) den Hintergrund für das Prüfzeichen bildet und optional aus einer Gruppe ausgewählt ist, die aus Papier, Kunststofffolien, Metallfolien, Textilien, Bulk-Kunststoffen oder Kombinationen davon besteht.

9. Verfahren nach einem der vorhergehenden Ansprüche, wobei der Schritt des Analysierens von Informationen (310), die der erkannten Strahlung entsprechen, um das Vorhandensein zusätzlicher Strahlung zu bestimmen, die von dem Hintergrund emittiert wird, den Schritt des Bestimmens umfasst, dass die empfangene Strahlung einen festgelegten Grenzwert übersteigt.

10. System (100) zur Betrugserkennung in einem Leergutautomaten (1), wobei das System Folgendes umfasst:
- mindestens eine Strahlung emittierende Vorrichtung (104), die dafür konfiguriert ist, Strahlung (106) in dem Wellenlängenbereich optischer Strahlung zu emittieren, um einen Bereich eines Nahrungsmittel- oder Getränkebehälters (102) zu beleuchten, der von dem Leergutautomaten aufgenommen wird, wobei der Bereich ein Prüfzeichen und einen Hintergrund rings um das Prüfzeichen enthält, wobei das Prüfzeichen ein Sicherheitszeichen und/oder ein Barcode ist und der Hintergrund in der Nähe des Prüfzeichens angeordnet ist,
- mindestens eine Strahlung erkennende Vorrichtung (110), die dafür konfiguriert ist, Strahlung (108) zu erkennen, die von der mindestens einen Strahlung emittierenden Vorrichtung emittiert und danach an dem Nahrungsmittel- oder Getränkebehälter reflektiert wird, und/oder von der mindestens einen Strahlung emittierenden Vorrichtung emittiert und dann durch den Nahrungsmittel- oder Getränkebehälter durchgeleitet wird, und/oder Erkennen von Strahlung, die von dem Nahrungsmittel- oder Getränkebehälter in Reaktion auf das Beleuchten emittiert wird, durch die Strahlung erkennende Vorrichtung,
- mindestens eine Verarbeitungseinheit (115) in Verbindung mit der mindestens einen Strahlung erkennenden Vorrichtung, wobei die mindestens eine Verarbeitungseinheit für Folgendes konfiguriert ist:
Empfangen von Informationen, die der von der mindestens einen Strahlung erkennenden Vorrichtung erkannten Strahlung entsprechen,
Identifizieren eines Prüfbereichs auf dem Behälter, wobei der Prüfbereich das Prüfzeichen und den in der Nähe des Prüfzeichens angeordneten Hintergrund enthält,
- Analysieren der Informationen, die der erkannten Strahlung entsprechen, um das Vorhandensein zusätzlicher Strahlung zu bestimmen, die von dem Hintergrund in der Nähe des Prüfzeichens emittiert wird, wobei die zusätzliche Strahlung nicht von gültigen Nahrungsmittel- oder Getränkebehältern empfangen wird und wobei die zusätzliche Strahlung fluoreszierende Strahlung umfasst, und
- Klassifizieren des Nahrungsmittel- oder Getränkebehälters als Betrugsversuch auf das Bestimmen des Vorhandenseins der zusätzlichen Strahlung hin,
- Lesen des in dem Prüfbereich enthaltenen Prüfzeichens mit Hilfe von Barcode-Decodierung und/oder mit Hilfe von Zeichenerkennung und/oder Buchstabenerkennung und/oder Mustererkennung, um eine grafische Nachricht zu decodieren, die eine räumliche Ausdehnung aufweist, und optional,
- Klassifizieren des Nahrungsmittel- oder Getränkebehälters als potentiell gültig auf das erfolgreiche Lesen des Prüfzeichens hin.

11. System nach Anspruch 10, wobei die mindestens eine Strahlung emittierende Vorrichtung Strahlung in einem oder mehreren Wellenlängenbereichen emittiert, die aus einer Gruppe ausgewählt sind, die aus dem Ultraviolettbereich, dem sichtbaren Bereich und dem Infrarotbereich besteht, und
wobei die Strahlung emittierende Vorrichtung optional Strahlung nur in dem einen oder den mehreren Wellenlängenbereichen emittiert.

12. System nach einem der Ansprüche 10 bis 11, wobei die zusätzliche Strahlung von einem Betrugsversuchsmaterial (114) stammt, das auf dem Nahrungsmittel- oder Getränkebehälter vorhanden ist, wobei das Betrugsversuchsmaterial den Hintergrund für das Prüfzeichen bildet, und wobei das Betrugsversuchsmaterial optional eines oder mehrere ist, die aus einer Gruppe ausgewählt sind, die aus Papier, Kunststofffolien, Metallfolien, Textilien, Bulk-Kunststoffen oder Kombinationen davon besteht.

13. System nach Anspruch 12, wobei das Prüfzeichen auf dem Betrugsversuchsmaterial vorhanden ist und wobei das Betrugsversuchsmaterial einen ursprünglichen Barcode oder ein ursprüngliches Sicherheitszeichen bedeckt, die auf dem Nahrungsmittel- oder Getränkebehälter bereitgestellt ist, oder auf andere Weise das Erscheinungsbild des Nahrungsmittel- oder Getränkebehälters verändert.

14. System nach einem der Ansprüche 10 bis 13, wobei die zusätzliche Strahlung Strahlung in einem oder mehreren Wellenlängenbereichen umfasst, die aus einer Gruppe ausgewählt sind, die aus dem Ultraviolettbereich, dem sichtbaren Bereich und dem Infrarotbereich und/oder fluoreszierender Strahlung besteht.

15. System nach einem der Ansprüche 10 bis 14, wobei
- die Strahlung erkennende Vorrichtung dafür konfiguriert ist, Licht zu empfangen, das an oder in der Nähe des Barcodes oder dem Sicherheitszeichen reflektiert wird, und/oder dafür konfiguriert ist, Licht zu empfangen, das an oder in der Nähe des Barcodes oder dem Sicherheitszeichen emittiert wird.

16. System nach einem der Ansprüche 10 bis 15, wobei die Strahlung erkennende Vorrichtung dafür konfiguriert ist, Strahlung in einem oder mehreren Wellenlängenbereichen zu erkennen, die aus einer Gruppe ausgewählt sind, die aus dem Ultraviolettbereich, dem sichtbaren Bereich und dem Infrarotbereich besteht.

17. System nach einem der Ansprüche 10 bis 16, wobei die mindestens eine Verarbeitungseinheit ferner für Folgendes konfiguriert ist: Klassifizieren des Nahrungsmittel- oder Getränkebehälters als gültig oder potentiell gültig auf das Bestimmen des Nichtvorhandenseins der zusätzlichen Strahlung hin.

18. System nach einem der Ansprüche 10 bis 17, wobei die mindestens eine Verarbeitungseinheit mindestens eine erste und eine zweite Verarbeitungseinheit umfasst und
wobei die erste und die zweite Verarbeitungseinheit dafür konfiguriert sind, zusammen die folgenden Schritte auszuführen:
- Empfangen von Informationen, die der von der Strahlung erkennenden Vorrichtung erkannten Strahlung entsprechen,
- Analysieren der Informationen, die der erkannten Strahlung entsprechen, um das Vorhandensein zusätzlicher Strahlung zu bestimmen, die von dem Hintergrund in der Nähe des Prüfzeichens emittiert wird, wobei die zusätzliche Strahlung nicht von gültigen Nahrungsmittel- oder Getränkebehältern empfangen wird und wobei die zusätzliche Strahlung fluoreszierende Strahlung umfasst, und
- Klassifizieren des Nahrungsmittel- oder Getränkebehälters als Betrugsversuch auf das Bestimmen des Vorhandenseins der zusätzlichen Strahlung hin.

19. Leergutautomat, versehen mit einem System zur Betrugserkennung nach einem der Ansprüche 10 bis 18.

20. Leergutautomat nach Anspruch 19, wenn mit dem System zur Betrugserkennung nach Anspruch 18 versehen, wobei die mindestens eine Verarbeitungseinheit eine Verarbeitungsschaltung umfasst und ein erster Abschnitt der Verarbeitungsschaltung im Inneren des Gehäuses des Leergutautomaten angeordnet ist und ein zweiter Abschnitt der Verarbeitungsschaltung außerhalb des Gehäuses des Leergutautomaten angeordnet ist und
wobei der erste und der zweite Abschnitt der Verarbeitungsschaltung der ersten und der zweiten Verarbeitungseinheit entsprechen.

## Revendications

1. Procédé (300) pour la détection de fraude dans un système de récupératrice automatique (1), le système de récupératrice automatique comportant au moins un dispositif d'émission de rayonnement (104), un dispositif de détection de rayonnement (110) et au moins une unité de traitement (115), le procédé comprenant les étapes suivantes :
réception (302) d'un récipient de produit alimentaire ou de boisson (102), lequel porte une marque de validation et un fond autour de ladite marque de validation,
dans lequel ladite marque de validation est une marque de sécurité et/ou un code-barres, et ledit fond est disposé à proximité de ladite marque de validation, ladite marque de validation est configurée pour être lue à l'aide d'un décodage de code-barres, et/ou à l'aide d'une reconnaissance de caractères et/ou d'une reconnaissance de lettres et/ou d'une reconnaissance de motif pour le décodage d'un message graphique présentant une extension spatiale ;
- éclairage (304) de la surface dudit récipient de produit alimentaire ou de boisson contenant ladite marque de validation, avec un rayonnement (106) comprenant des longueurs d'onde dans la plage de longueurs d'onde du rayonnement optique, ledit rayonnement étant émis à partir dudit au moins un dispositif d'émission de rayonnement ;
- détection d'un rayonnement (306, 108) émis à partir dudit au moins un dispositif d'émission de rayonnement et consécutivement réfléchi au niveau dudit récipient de produit alimentaire ou de boisson, et/ou d'un rayonnement émis à partir dudit au moins un dispositif d'émission de rayonnement et consécutivement transmis à travers ledit récipient de produit alimentaire ou de boisson, et/ou détection d'un rayonnement émis à partir dudit récipient de produit alimentaire ou de boisson en réponse audit éclairage avec ledit dispositif de détection de rayonnement ;
- transmission d'informations (308) correspondant au rayonnement détecté à partir dudit dispositif de détection de rayonnement à ladite au moins une unité de traitement ;
- au niveau de ladite au moins une unité de traitement :
- analyse desdites informations (310) correspondant au rayonnement détecté pour identifier une zone de validation sur ledit récipient, la zone de validation contenant ladite marque de validation et ledit fond disposé à proximité de ladite marque de validation, et pour déterminer l'existence d'un rayonnement supplémentaire émis à partir dudit fond à proximité de ladite marque de validation, ledit rayonnement supplémentaire n'étant pas reçu à partir de récipients de produit alimentaire ou de boisson valides, et ledit rayonnement supplémentaire comprenant un rayonnement fluorescent, et
- lors de la détermination (312a) de l'existence dudit rayonnement supplémentaire, classification dudit récipient de produit alimentaire ou de boisson comme frauduleux (314a).

2. Procédé selon la revendication 1, dans lequel ledit fond à proximité de ladite marque de validation est le fond situé à moins de 10 mm de ladite marque de validation.

3. Procédé selon la revendication 1 ou 2, dans lequel ladite zone de validation est comprise dans la plage de 1700 mm² à 5500 mm².

4. Procédé selon l'une quelconque des revendications précédentes, dans lequel
- ladite étape de transmission d'informations correspondant au rayonnement détecté à ladite unité de traitement est exécutée uniquement lors de la détection d'un rayonnement comprenant des longueurs d'onde en dehors de la plage de longueurs d'onde reçue à partir de récipients de produit alimentaire ou de boisson valides.

5. Procédé selon l'une quelconque des revendications précédentes, comprenant en outre l'étape suivante :
- envoi d'informations représentant au moins un spectre de longueurs d'onde classé à ladite unité de traitement, chacun desdits au moins un spectres de longueurs d'onde classés étant classé comme valide ou non valide ; et dans lequel
- ladite étape de détection de rayonnement comprend l'enregistrement d'un spectre de longueur d'onde ;
- ladite étape de transmission d'informations correspondant au rayonnement détecté à ladite unité de traitement comprend la transmission d'informations représentant ledit spectre de longueur d'onde enregistré à ladite unité de traitement ; et
- ladite étape de détermination de l'existence d'un rayonnement supplémentaire émis à partir dudit fond comprend la comparaison desdites informations correspondant au spectre de longueur d'onde enregistré avec ledit au moins un spectre de longueur d'onde classé, et, sur la base de cette comparaison, l'identification de toute existence d'un rayonnement supplémentaire.

6. Procédé selon l'une quelconque des revendications précédentes, dans lequel ladite étape d'analyse desdites informations correspondant au rayonnement détecté pour déterminer l'existence d'un rayonnement supplémentaire à partir dudit fond n'inclut pas la comparaison d'informations représentant une image à résolution spatiale de la surface du récipient avec des informations représentant une image prédéterminée d'un marquage de sécurité valide ou d'une marque de validation.

7. Procédé selon l'une quelconque des revendications précédentes, dans lequel, au niveau de ladite unité de traitement, un test supplémentaire est réalisé, comprenant les étapes suivantes :
- exécution d'une opération de lecture sur la marque de validation contenue dans ladite zone de validation à l'aide d'un décodage de code-barres, et/ou à l'aide d'une reconnaissance de caractères et/ou d'une reconnaissance de lettres et/ou d'une reconnaissance de motif,
- lors d'une lecture réussie de la marque de validation, classification dudit récipient de produit alimentaire ou de boisson comme potentiellement valide.

8. Procédé selon l'une quelconque des revendications précédentes, dans lequel ladite étape de détermination d'un rayonnement supplémentaire émis à partir dudit fond comprend la détection d'un matériau frauduleux (114) présent sur ledit récipient de produit alimentaire ou de boisson, et ledit matériau frauduleux forme le fond de ladite marque de validation et est optionnellement sélectionné parmi un groupe comprenant le papier, les feuilles plastiques, les feuilles métalliques, les textiles, le plastique en vrac ou des combinaisons de ceux-ci.

9. Procédé selon l'une quelconque des revendications précédentes, dans lequel ladite étape d'analyse desdites informations (310) correspondant au rayonnement détecté pour déterminer l'existence d'un rayonnement supplémentaire émis à partir dudit fond comprend l'étape de détermination que le rayonnement reçu dépasse une valeur seuil prédéterminée.

10. Système (100) pour la détection de fraudes dans une récupératrice automatique (1), ledit système comprenant :
- au moins un dispositif d'émission de rayonnement (104) configuré pour émettre un rayonnement (106) dans la plage de longueurs d'onde du rayonnement optique pour l'éclairage d'une zone dudit récipient de produit alimentaire ou de boisson (102) reçu par ladite récupératrice automatique, ladite zone contenant une marque de validation et un fond autour de ladite marque de validation, dans lequel ladite marque de validation est une marque de sécurité et/ou un code-barres, et ledit fond est disposé à proximité de ladite marque de validation ;
- au moins un dispositif de détection de rayonnement (110) configuré pour détecter un rayonnement (108) émis à partir dudit au moins un dispositif d'émission de rayonnement et réfléchi consécutivement au niveau dudit récipient de produit alimentaire ou de boisson, et/ou émis à partir dudit au moins un dispositif d'émission de rayonnement et consécutivement transmis à travers ledit récipient de produit alimentaire ou de boisson, et/ou pour détecter un rayonnement émis à partir dudit récipient de produit alimentaire ou de boisson en réponse audit éclairage par ledit dispositif de détection de rayonnement ;
- au moins une unité de traitement (115) en communication avec ledit au moins un dispositif de détection de rayonnement, l'au moins une unité de traitement étant configurée pour :
recevoir des informations correspondant au rayonnement détecté à partir dudit dispositif de détection de rayonnement ;
identifier une zone de validation sur ledit récipient, ladite zone de validation contenant ladite marque de validation et ledit fond disposé à proximité de ladite marque de validation ;
- analyser lesdites informations correspondant au rayonnement détecté pour déterminer l'existence d'un rayonnement supplémentaire émis à partir dudit fond à proximité de ladite marque de validation, ledit rayonnement supplémentaire n'étant pas reçu à partir de récipients de produit alimentaire ou de boisson valides, et ledit rayonnement supplémentaire comprenant un rayonnement fluorescent, et
- lors de la détermination de l'existence dudit rayonnement supplémentaire, classer ledit récipient de produit alimentaire ou de boisson comme frauduleux,
- lire la marque de validation contenue dans ladite zone de validation à l'aide d'un décodage de code-barres, et/ou à l'aide d'une reconnaissance de caractères et/ou d'une reconnaissance de lettres et/ou d'une reconnaissance de motif pour le décodage d'un message graphique présentant une extension spatiale, et optionnellement
- lors d'une lecture réussie de la marque de validation, classer ledit récipient de produit alimentaire ou de boisson comme potentiellement valide.

11. Système selon la revendication 10, dans lequel ledit au moins un dispositif d'émission de rayonnement émet un rayonnement dans une ou plusieurs plages de longueurs d'onde sélectionnées parmi un groupe comprenant la plage des ultraviolets, la plage visible et la plage infrarouge, et
dans lequel ledit dispositif d'émission de rayonnement émet optionnellement un rayonnement uniquement dans lesdites une ou plusieurs plages de longueurs d'onde.

12. Système selon l'une quelconque des revendications 10-11, dans lequel ledit rayonnement supplémentaire provient d'un matériau frauduleux (114) présent sur ledit récipient de produit alimentaire ou de boisson, dans lequel ledit matériau frauduleux forme le fond de ladite marque de validation, et dans lequel ledit matériau frauduleux est optionnellement un ou plusieurs éléments sélectionnés parmi un groupe comprenant le papier, les feuilles plastiques, les feuilles métalliques, les textiles, le plastique en vrac ou des combinaisons de ceux-ci.

13. Système selon la revendication 12, dans lequel ladite marque de validation est présente sur ledit matériau frauduleux, et ledit matériau frauduleux recouvre ou remplace un code-barres original ou un marquage de sécurité original disposé sur ledit récipient de produit alimentaire ou de boisson, ou modifie autrement l'apparence dudit récipient de produit alimentaire ou de boisson.

14. Système selon l'une quelconque des revendications 10-13, dans lequel ledit rayonnement supplémentaire comprend un rayonnement dans une ou plusieurs plages de longueurs d'onde sélectionnées parmi un groupe comprenant la plage des ultraviolets, la plage visible et la plage infrarouge et/ou un rayonnement fluorescent.

15. Système selon l'une quelconque des revendications 10-14, dans lequel
- ledit dispositif de détection de rayonnement est configuré pour recevoir une lumière réfléchie au niveau dudit code-barres ou de ladite marque de sécurité ou à proximité de ceux-ci ; et/ou configuré pour recevoir une lumière émise au niveau dudit code-barres ou de ladite marque de sécurité ou à proximité de ceux-ci.

16. Système selon l'une quelconque des revendications 10-15, dans lequel ledit dispositif de détection de rayonnement est configuré pour détecter un rayonnement dans une ou plusieurs plages de longueurs d'onde sélectionnées parmi un groupe comprenant la plage des ultraviolets, la plage visible et la plage infrarouge.

17. Système selon l'une quelconque des revendications 10-16, dans lequel ladite au moins une unité de traitement est en outre configurée pour : lors de la détermination de la non-existence dudit rayonnement supplémentaire, classer ledit récipient de produit alimentaire ou de boisson comme valide ou potentiellement valide.

18. Système selon l'une quelconque des revendications 10-17, dans lequel ladite au moins une unité de traitement comprend au moins une première et une deuxième unités de traitement ; et
dans lequel lesdites première et deuxième unités de traitement sont configurées pour exécuter conjointement les étapes suivantes :
- réception d'informations correspondant au rayonnement détecté à partir de l'au moins un dispositif de détection de rayonnement ;
- analyse desdites informations correspondant au rayonnement détecté pour déterminer l'existence d'un rayonnement supplémentaire émis à partir dudit fond à proximité de ladite marque de validation, ledit rayonnement supplémentaire n'étant pas reçu à partir de récipients de produit alimentaire ou de boisson valides, et ledit rayonnement supplémentaire comprenant un rayonnement fluorescent, et
- lors de la détermination de l'existence dudit rayonnement supplémentaire, classement dudit récipient de produit alimentaire ou de boisson comme frauduleux.

19. Récupératrice automatique dotée d'un système de détection de fraudes selon l'une quelconque des revendications 10-18.

20. Récupératrice automatique selon la revendication 19, lorsque celle-ci est dotée du système de détection de fraudes selon la revendication 18, dans laquelle ladite au moins une unité de traitement comprend une circuiterie de traitement, et une première partie de ladite circuiterie de traitement est disposée à l'intérieur du boîtier de la récupératrice automatique et une deuxième partie de ladite circuiterie de traitement est disposée à l'extérieur du boîtier de la récupératrice automatique ; et
dans laquelle lesdites première et deuxième parties de ladite circuiterie de traitement correspondent aux première et deuxième unités de traitement.
